# EUROPEAN PATENT APPLICATION

(11) **EP 1 666 326 A1**
(43) Date of publication of application: **07.06.2006**
(21) Application number: 04742043.5
(22) Date of filing: 03.07.2004
(51) Int. Cl.: B60T 17/18, F16G 11/12

(54) **MECHANICAL SAFETY LOOSENING DEVICE**

(30) Priority: 04.07.2003 ES 200301577
(71) Applicant: Batz, S.Coop., 48140 Igorre (Bizkaia) (ES)
(72) Inventor: BRECZEWSKI JAWORSKI, Grzegorsz Tomasz, E-48140 IGORRE (Bizkaia) (ES); PALACIO ARGÜELLES, Joseba, E-48980 SANTURTZI (Bizkaia) (ES)
(74) Representative: Igartua, Ismael
(86) International application number: PCT/ES2004/000314
(87) International publication number: WO 2005/002941

(57) **Abstract**

The invention relates to a mechanical device for safety release comprises a connection element(1) comprising connection means to connect a first end (2a) of a first tensing element (2) and a second end (3a) of a second tensing element (3), and actuating means (4) to cause the movement of said connection element (1) from a deactivated position where said connection means maintain said first and second ends (2a, 3a) of said first and second tensing elements (2, 3) at a certain mutual distance, and where the connection element (1) transmits a tension between the first and second tensing elements (2, 3), to an activated position where the connection means determine a mutual separation of said first and second ends (2a, 3a) of said first and second tensing elements (2, 3) that causes the tension between them to be freed. It is applicable to an auxiliary or parking brake of a vehicle.

## Description

### TECHNICAL FIELD

This invention relates to a mechanical device for safety release, applicable to an auxiliary or parking brake of a vehicle.

### PRIOR ART

Many vehicles in general and in particular motor vehicles are fitted with an auxiliary or parking brake which has specific actuating means used to selectively generate a force to press the braking elements, as for example brake shoes, against the rotating element of the vehicle as for example a drum or disc brake. The mentioned force is generally transmitted from a tension generation device integrated in said actuating means to the braking elements through the tensing of a tension transmission element, such as a flexible cable or a rod.

A typical tension generating device for actuating a parking brake comprises a totally mechanical manual actuating device such as a lever or a handle joined to an easily releasable ratchet by means of a pushbutton. However, recently more electromechanical devices have been incorporated where at least one part of the mechanism necessary to actuate the braking elements is generated by a screw-type mechanism actuated by an electric motor or other tension generating device supplied with electrical energy from the vehicle. In international patent applications WO 90/15734, WO 90/15743, WO 96/26091, WO 97/01472, and WO 98/41431 several constructions for auxiliary actuating devices for electro-mechanically actuated systems are described. These electro-mechanical devices have the advantage of generating the necessary force regardless of the physical strength of the user and are easily controlled electronically, however the disadvantage is that they rely on the electrical supply for both actuating the braking elements as well as releasing them.

Therefore a vehicle whose brake has been previously engaged by means of an electromechanical means cannot be disengaged should there be a power cut on the electrical system of the vehicle. Additionally a brake with a manual mechanical actuating device could even fail leaving the brake engaged and without the possibility of disengaging it.

### BRIEF DISCLOSURE OF THE INVENTION

One object of the invention is to provide a mechanical device for safety release applicable to an auxiliary or parking brake of a vehicle able to transmit tension between the tensing elements of said brake and able to selectively release this tension upon the action of the user

These and other objects are achieved providing a mechanical device for safety release applicable to an auxiliary or parking brake of a vehicle comprising a connecting element provided with connection means to connect a first end of a first tensing element and a second end of a second tensing element and actuating means to provoke a movement of said connecting unit from the deactivated position to the activated position. The mentioned first and second tensing elements form part of the auxiliary or parking brake system of a vehicle and act under tension to transmit a force from one of the tension generating devices integrated in the actuating means of the auxiliary braking to the braking elements. In said deactivated position the mentioned connection means keep the first and second ends of the first and second tensing elements at a certain mutual distance so that the connecting element transmits tension between the first and second tensing elements. In accordance with this, in the deactivated position, the connection element maintains the first and second tensing elements tense and the tension between both is transmitted by means of the connecting element. In the activated position, the connection means determine a mutual separation of the first and second ends of the first and second tensing elements, which produces a liberation of said tension between the two and the auxiliary brake is released without the intervention of the actuating means of the auxiliary brake.

In accordance with the above the connection element actuates when it is in the deactivated position, as a passive element that forms part of the power transmission chain of the auxiliary or parking brake, without altering its functioning in any way. On the contrary, in the activated position the connection element interrupts the stated power transmission invalidating the auxiliary brake action.

According to one example of the embodiment, the first and second ends of the first and second tensing elements include first and second gripping configurations, and said connection means comprise first and second engaging means under tension to couple respectively with said first and second gripping configurations when the connection element is in the deactivation position, and first and second released engaging means, to respectively couple with said first and second gripping mechanisms when the connection element is in the activated position. Respective first and second guiding means are configured and provided to guide the movement of the first and second gripping configurations between said first and second engaging means under tension, and said respective first and second released engaging configuration, when the connection element goes from the deactivated position to the activated position.

In the connection element, the distance between the first and second engaging means under tension is shorter than the distance between the first and second released engaging configuration. The connection element is preferably configured and fitted so that it can pivot on one of its axis due to the action of said actuating means between said deactivated and activated positions. The first and second engaging means under tension are fitted on the opposite sides of said axis, equidistant and aligned to the same, and the first and second released engaging configurations are fitted on the opposite sides of said axis also equidistant and aligned to the same, while the first and second guiding means define a mutually symmetric path with respect to said axis. Therefore the connection element can pass from the deactivated position to the activated position by means of a simple rotation movement around the axis at a certain angle, which is predetermined by the position of the first and second engaging means under tension in relation to the positions of the first and second released engaging configuration. When said tension stops between the first and second tensing elements, for example on the inverse actuating of the auxiliary braking means, the return of the connection element to the deactivated position is carried out automatically by an elastic element situated between the connection element and external housing of the device. Said elastic element is purposely provided to charge itself accumulating energy when the connection element moves from the deactivated position to the activated position, and to free the accumulated energy actuating said return of the connection element to the deactivated position.

The actuating means of the releasing device in accordance with the invention are totally independent from the actuating means of the auxiliary brake and comprise a pushing element connected to a force transmission element, as for example a flexible cable connected in turn to a force application mechanism, as a lever or a handle. When said pushing element is moved it makes contact with the profile of the cam defined in the connection element so that torque is created making the connection element pivot with respect to the axis in the appropriate direction so as to move from the deactivated position to the activated position.

In an alternative embodiment said connection element comprises a group of three elements which are articulated to each other with the same functionality as explained before and as will be explained in more detail.

### DISCRIPTION OF THE DRAWINGS

These and other objects, advantages and characteristics of the invention will be made evident in the light of the drawings and the detailed description thereof.
FIG. 1 shows a perspective view of the device of the invention in the deactivated position where the housing and actuating means have been omitted to enable greater clarity in the drawing.
FIG. 2 shows a perspective view of the device in figure 1 in the activated position where the housing and actuating means have been omitted.
FIG. 3 shows a perspective view of the device in figure 1 in the deactivated position showing only part of the housing of said device.
FIG. 4 shows a perspective view of a second example of the embodiment of the invention where the connection element comprises three elements joined by articulations.
FIG. 5 shows a perspective view of the device in figure 4 in the deactivated position with some of the components eliminated and,
FIG. 6 shows a perspective view, also with the elimination of some of the components that illustrates the functionality of the two springs used in this example of embodiment.

### Detailed description of some embodiments

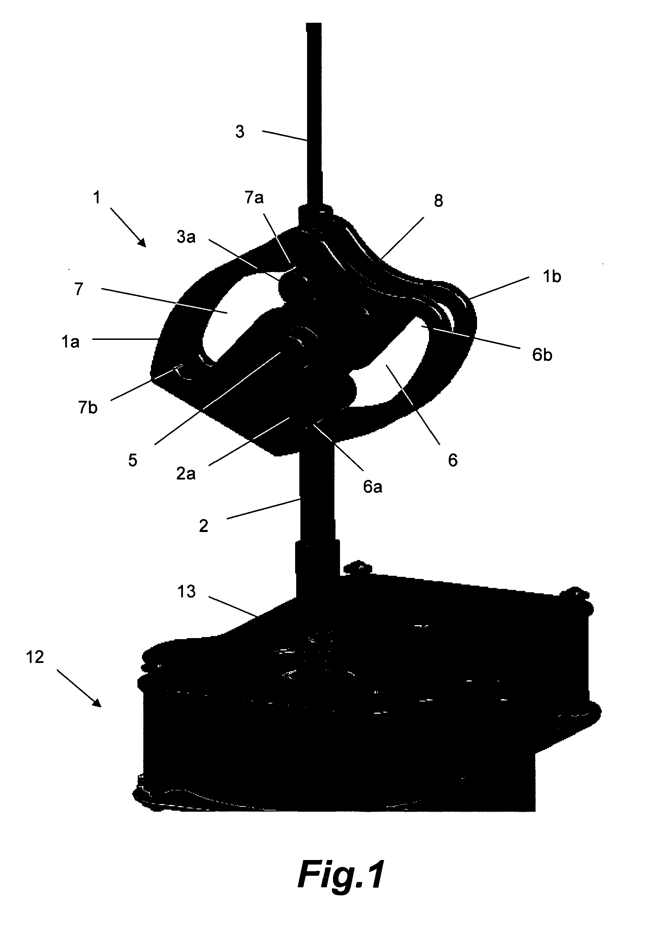

Figures 1 to 3 show a first embodiment of the mechanical device of the invention applied to an auxiliary or parking brake of a vehicle, which includes a tension generation device 12, a first tension element 2, formed by a shaft that prolongs from the barrel 13 of said tension generation device 12, and a second tension element 3 formed by a flexible cable connected to braking elements (not shown) of said auxiliary brake of the vehicle. Typically the tension generating device is actuated by a electrical motor or other electromechanical device to move said screw spindle 13 in a pre-determined direction (towards the inside of the tension generation device 12 on the drawings)to tense the second tension element 3 and in the opposing direction to slacken said tension.

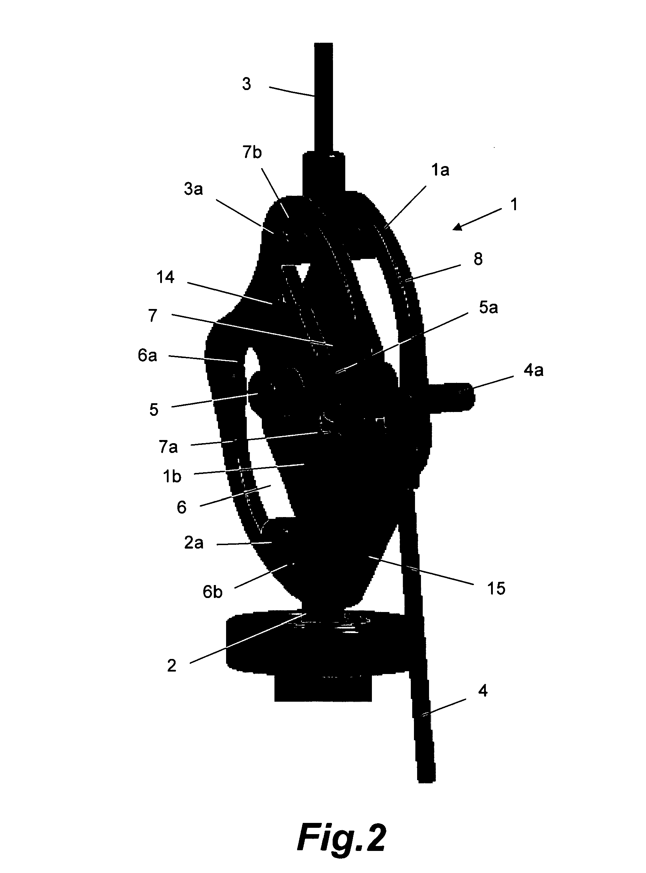

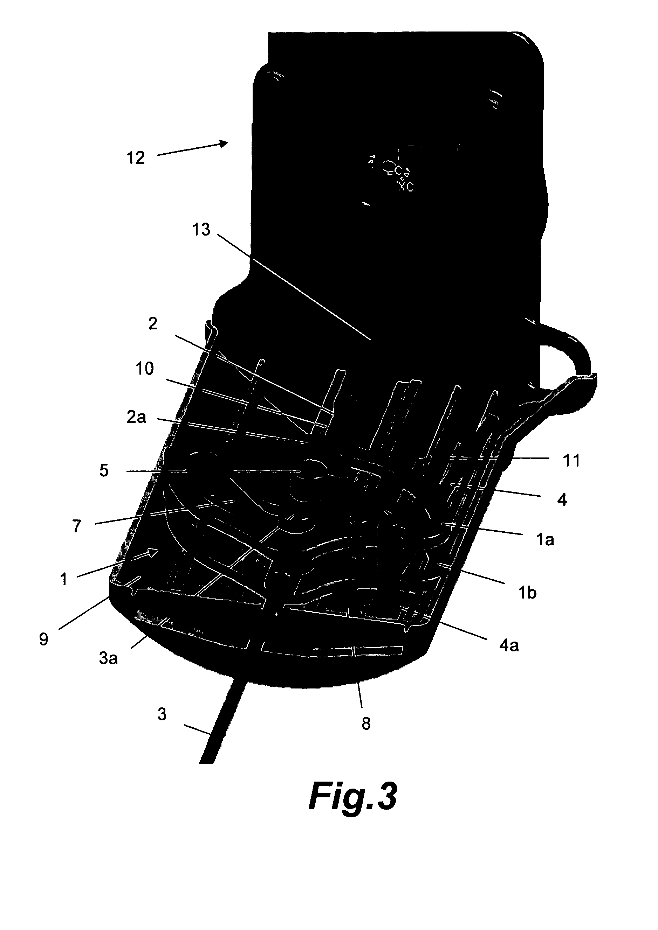

The device of the invention comprises, in accordance with this first embodiment, a connection element 1 provided with connection means to connect a first end 2a of the first tensing element 2 and a second end 3a of a second tensing element 3. The device also comprises actuating means 4 (described in detail with reference to figures 2 and 3) to cause a movement of said connection element 1 from the deactivated position, shown in Fig. 1 to the activated position, shown in Fig.2.

In the deactivated position shown in Fig. 1, said connection means of the connection element 1 maintain said first and second ends 2a and 3a of the first and second tension elements 2, 3 at a mutually determined distance, and the connection element 1 transmits the tension generated by the tension generation device 12 from the first tension element 2 to the second tension element 3. In the activated position, shown in Fig.2, the connection means of the connection element 1 determine a mutual separation of the first and second ends 2a, 3a from the first and second tension elements 2 and 3 greater than in the deactivated position, which causes a slacking or freeing of said tension between them.

For this, the first and second ends 2a, 3a of the first and second tension elements 2, 3 include the respective first and second gripping configurations 2a, 3a and the connection means of the connection element 1 comprise a first and second configurations of engaging means under tension 6a, 7a, adapted respectively to couple with the first and second gripping configurations 2a, 3a when the connection element 1 is in the deactivated position as is shown in Fig. 1, and first and second released engaging means 6b, 7b adapted respectively to couple with the first and second gripping configurations 2a and 3a, when the connection element 1 is in the activated position, as is shown in Fig. 2. First and second respective guiding means 6, 7 are incorporated to guide, when the connection element 1 passes from the deactivated position (Fig. 1) to the activated position (Fig 2), a movement of the first and second gripping configurations 2a and 3a respectively from the first engaging means under tension 6a to the first released engaging configuration 6b, and from the second engaging means under tension 7a to the second released engaging configuration 7b. Of course, the first and second guiding means 6, 7 also guide the first and second gripping means 2a, 3a, in a return movement of the connection element 1 to the deactivated position. To obtain the mentioned tension slacking on the connection element, the distance between the first and second configurations engaging means under tension 6a, 7a is shorter than the distance between the first and second released engaging configurations 6b, 7b.

As is shown in figures 1 to 3, the connection element 1 is configured and fitted so that it can pivot on axis 5 due to the action of said actuating means 4 between the deactivated and activated positions. The first and second engaging configurations under tension 6a, 7a are fitted on the opposite sides of said axis 5, equidistant and aligned to the same, and the first and second released engaging configurations 6b,7b are fitted on the opposite sides of said axis 5, although as has been stated before the distances between the first and second released engaging configurations 6b,7b to the axis 5 are greater than the distances between the first and second engaging configurations under tension 6a, 7a to the axis 5. The first and second guiding means 6, 7 define a mutually symmetric path with respect to said axis 5, therefore, in connection element 1, the first and second engaging means under tension and released 6a, 6b, communicated by the first guiding means 6, and the second engaging means under tension and released 7a, 7b, communicated by the second guiding means 7, present a polar symmetry with respect to axis 5. Therefore, when connection element 1 is pivoted around axis 5 from the activated to the deactivated position, the first and second gripping positions 2a, 3a separate one from the other and then both in relation to the axis 5 in a balanced manner.

In accordance with the first embodiment shown in figures 1 to 3, the connecting element 1 is formed by twin plates 1a, 1b facing each other in a parallel manner joined together with a separation defined between them. The first and second guiding means 6, 7 comprise their respective pair of facing slots on said twin plates 1a,1b and the ends of said pair of slots 6, 7 form the first and second configurations of engaging means under tension 6a, 7a and the first and second released engaging configurations 6b, 7b. The first and second ends of the first and second tension elements 2, 3 are disposed on said separation between the two plates 1a, 1b and first and second gripping configurations 2a, 3a define their respective cylindrical bodies, perpendicular to the direction of the tension transmission. Said cylindrical bodies 2a, 3a are fixed in their centre to the respective first and second tension elements 2, 3 and have end portions inserted respectively into the slots facing each one of the pair of slots 6, 7. In this way, the first and second gripping configurations 2a, 3a can slide freely on the first and second guiding means 6, 7 and engage in the first and second engaging configurations under tension 6a, 7a with the connection element 1 in the deactivated position (Fig. 1) and in the first and second released engaging configurations 6b, 7b with the connection element 1 in the activate position (Fig.2).

As is shown in figure 2, said actuating means 4 of the releasing device comprise a pushing element 4a in the shape of a long body perpendicular to the transmission direction connected to a force transmission element 4 as a flexible cable connected to a force application mechanism as a lever or a handle (not shown). When said force application mechanism is actuated said pushing element 4a is moved by the action of said force transmission element 4 against a cam profile 8 defined in the respective peripheral rims of the twin plates 1a, 1b. The contact point, i.e., the application of force, between the pushing element 4a and said cam profile 8 is separated a certain distance from axis 5 , by which torque is created that makes the connector element 1 pivot from the deactivated position (Fig.1) to the activated position (Fig.2).

From Fig.2 it can also be appreciated in this embodiment, that the twin plates 1a, 1b of the connector element 1 are formed from a one-piece stamped metal sheet and bent in half to enable the pairs of slots 6, 7 and some rims of said metal sheet that constitute said cam profile 8 to face each other. Axis 5 presents a central area with a greater diameter 5a that defines a couple of steps, so that, when the metal sheet is bent to the required position, axis 5 remains retained between the twin plates 1a, 1b with the possibility of pivoting freely. Therefore, the twin plates 1a, 1b remain joined by a portion of the metal sheet in the shape of a tab 15 at one side of axis 5, and also by at least a joining element, as a rivet 14 or a screw, that connects both twin plates 1a, 1b to each other in the opposite side of axis 5. However other constructions are possible (not shown) for the connection element 1. For example, the twin plates of the connection element could be formed from the two respective separate parts of the stamped metal sheets and the parts could be interconnected in the required position by at least one joining element such as a rivet or screw or preferably by several joining elements, and axis 5 could be retained in a similar way to that described in relation with the illustrated embodiment. Alternatively, in one case as well as the other, axis 5 could be fixed to the twin plates 1a, 1b and act as a joining element between them.

With reference now to Fig. 3, the device of the embodiment of the invention that is being described comprises an external housing 9 (of which only part is shown in Fig. 3) that defines a pair of facing grooves 10 (of which only one is shown in Fig.3) parallel to the tension transmission direction. Into said pair of facing grooves 10, end portions of axis 5 and said end portions of the first and second gripping configurations 2a, 3a are inserted in a sliding manner, so that the connection element 1 can move together with the first and second gripping configurations 2a, 3a in a linearly guided manner along the facing grooves 10 while being able to pivot between the activated and deactivated positions by the action of the actuating means 4. Said external housing 9 preferably defines another pair of facing grooves 10 (of which only one is shown in Fig. 3) almost parallel to the tension transmission direction. In the other said facing grooves 11, end portions of the pushing element 4a are inserted in a sliding manner, so that it can be moved linearly in a guiding manner along the other facing pair of grooves 11 by the action of the actuating means 4 so as to pivot the connection element 1.

The device in accordance with the first embodiment of this invention includes an elastic element (not shown) fitted between the connection element 1 and said external housing 9. Said elastic element adopts for example the form of a helicoidal spring associated to axis 5 and purposely configured and fitted to be charged accumulating energy when the connection element 1 moves from the deactivated position to the activated position, and to actuate, by freeing the accumulated energy, a return of the connection element 1 to the deactivated position when the tension between the first and second tension elements 2, 3 stops through the inverse actuating of the tension generating device 12.

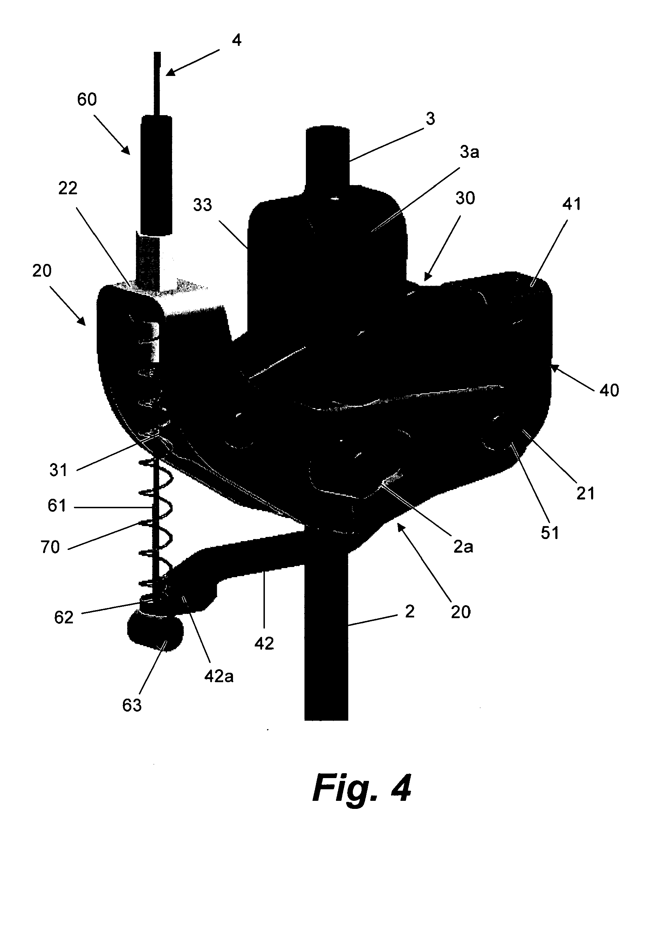

Figures 4 to 6 show a second embodiment of the invention wherein said connection element 1 comprises:
- a first element 20, joined to said first end 2a of said first tension element 2;
- a second element 30 joined to said end 3a of the second tensing element 3, joined at one end 31 by an articulation 50 to said first element 20 and fitted at its other end, distal, with an entering configuration 32; and
- a third element 40 joined to the end 21 of the first element 20 by an articulation 51, distal from the articulation 50, said third element 40 adopting at one end configuration 41 susceptible to hooking up and retaining said entering configuration 32 and provided with a lever arm 42.

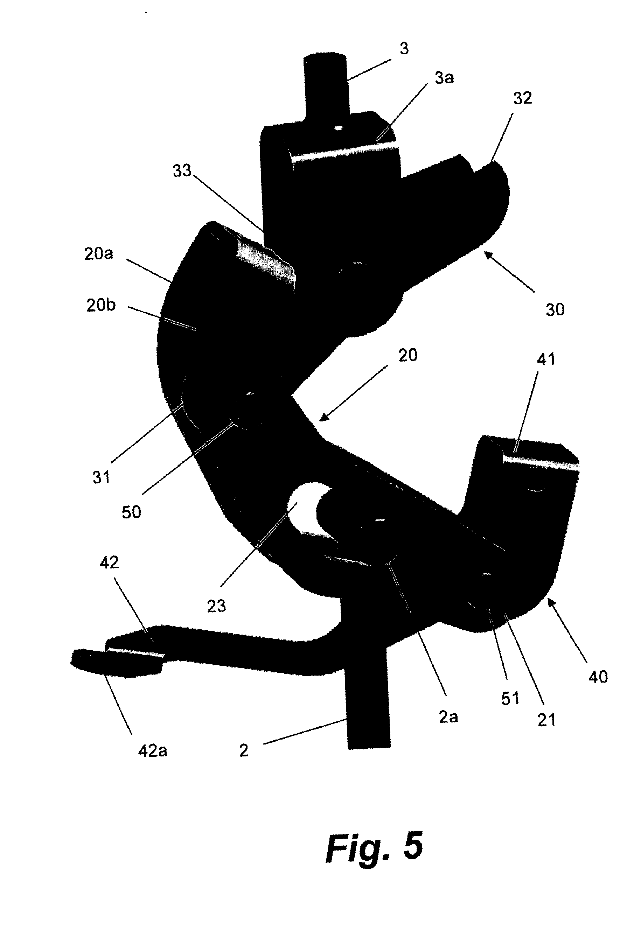

As can be clearly appreciated in figures 4 and 5, the interrelation between the three elements 20, 30, 40 is such that a free side 42a of said lever arm 42 is joined by said actuating means 4 with one end 22 of said first example 20, distal from the articulation 51, so that when the ends 22 and 42 come near thanks to the activation of said actuating means 4, the hook from configuration 41 is freed on configuration 32. It is also observed in the mentioned figures that the end 2a of the first tensing element 2 is situated between the articulations 50 and 51 and said end 3a of the second tensing element 3 remains joined in an articulated manner to a middle portion 33 of the second element 30.

Element 20 is formed as shown by figures 4 to 6 by twin parallel plates 20a, 20b facing each other, joined together by said end 22 in a bridge manner, distanced from the articulation 50 (situated between said union area of end 2a and said end 22), said twin plates 20a, 20b defining a separation between them, where said element 30 is placed, in an embracing arrangement.

Said twin plates 20a, 20b, facing each other, each comprise a respective elongated opening 23, with a longitudinal arched development, providing a connection with said end 2a that constitutes a gripping configuration in the shape of a transversal cylindrical body to said tension transmitter, the ends of said cylindrical body penetrating in the elongated openings 23 (figures 4 and 5).

The actuating means 4 in this second embodiment are formed by a Bowel cable 61 whose cover 60 is coupled to end 22 or the bridge of first element 20, and the end 62 (fitted with a cylinder 63) of cable 60 is joined to end 42a of the lever arm 42, with a co-axial spring 70 on the cable section 61 between the two mentioned extremes 22, 42 that tends to separate them.

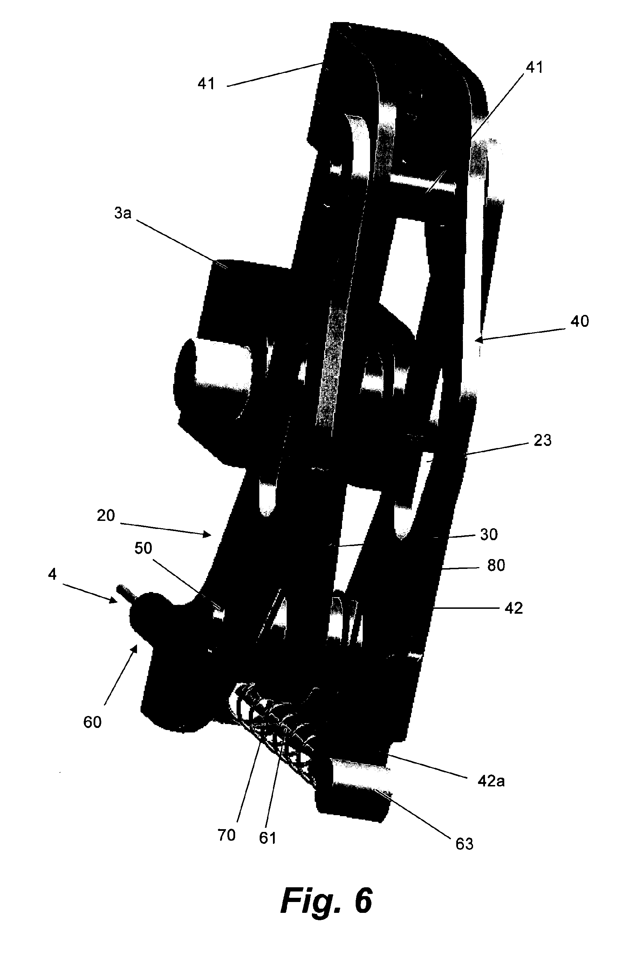

Figure 6 also shows the use of a second spring 80 that tends to maintain the connection elements 30, 40 in a position where their respective configurations 32 and 41 remain joined (figure 4), helping recover said state from the situation at figure 5, when the first tensing element 2 frees tension by the actuation of said device 12.

While this invention has been described using examples of embodiments, those skilled in the art would be able to introduce variations and modifications without departing from the scope of the invention as defined in the following claims. For example the release device of this invention could be applied to an auxiliary or parking brake worked by a manually actuated tension generating device instead of the electromechanically actuated tension generating device illustrated.

## Claims

1. Mechanical device for safety release, applicable to an auxiliary or parking brake of a vehicle, **characterised in that** it comprises a connection element(1) comprising connection means to connect a first end (2a) of a first tensing element (2) and a second end (3a) of a second tensing element (3), and actuating means (4) to cause the movement of said connection element (1) from a deactivated position where said connection means maintain said first and second ends (2a, 3a) of said first and second tensing elements (2,3) at a certain mutual distance, and where the connection element (1) transmits a tension between the first and second tensing elements (2,3), to an activated position where the connection means determine a mutual separation of said first and second ends (2a, 3a) of said first and second tensing elements (2, 3) that causes the tension between them to be freed.

2. Device, according to claim 1, **characterised in that** the first and second ends of the first and second tensing elements (2, 3) include respective first and second gripping configurations (2a, 3a), and said connection means comprise first and second engaging means under tension (6a, 7a) to couple selectively with said first and second gripping configurations (2a,3a) when the connection element (1) is in the deactivated position, and first and second released engaging configurations (6b, 7b) to couple respectively with first and second gripping configurations (2a, 3a) when connection element (1) is in the activated position, first and second guiding means (6, 7) being placed to guide a movement of the first and second gripping configurations (2a, 3a) between said respective first and second engaging means under tension (6a, 7a) and said respective first and second released engaging configurations (6b, 7b) when the connection element (1) passes from the deactivated position to the activated position.

3. Device, according to claim 2, **characterised in that** in the connection element (1) the distance between the first and second engaging configurations under tension (6a, 7a) is shorter than the distance between the first and second released engaging configurations (6b, 7b)

4. Device, according to claim 3, **characterised in that** the connection element (1) is configured and fitted in such a way that it can pivot on an axis (5) due to the action of said actuating means (4) between said activated and deactivated positions, the first and second engaging means under tension (6a, 7a) being placed on the opposite sides of said axis (5), equidistant and aligned with the same, and the first and second released engaging configurations (6b, 7b) on the opposite sides of said axis (5), equidistant and aligned with the same, said first and second guiding means (6, 7) defining mutually symmetric paths with respect to said axis (5).

5. Device, according to claim 4 **characterised in that** the connection element (1) is formed by facing parallel twin plates (1a, 1b), joined together defining a separation between them.

6. Device, according to claim 5 **characterised in that** the first and second guiding means (6,7) comprise respective facing pairs of slots on the twin plates (1a,1b), the ends of said facing pairs of slots (6, 7) forming said first and second engaging means under tension (6a, 7a) and said first and second released engaging configurations (6b, 7b).

7. Device, according to claim 6, **characterised in that** the first and second ends of the first and second tensing elements (2,3) are arranged in said separation between the twin plates (1a,1b) and the first and second gripping configurations (2a,3a) define cylindrical bodies, transverse to the tension transmission direction, each one with an end portion inserted respectively in the slots facing each one of the pair of slots (6, 7).

8. Device, according to claim 7, **characterised in that** said actuating means (4) comprise a pushing element (4a) connected to a force transmission element (4) of a force application mechanism to move said pushing element against the cam profile (8) defined in respective peripheral edges of the twin plates (1a,1b).

9. Device, according to claim 5, **characterised in that** said twin plates (1a, 1b) of the connection element (1) are formed from a piece of stamped metal sheet and bent retaining the axis (5)

10. Device, according to claim 9, **characterised in that** it includes at least one joining element, as a rivet (14) or screw, connecting the twin plates (1a, 1b) together.

11. Device, according to claim 5, **characterised in that** said twin plates (1a, 1b) of the connection element (1) are formed from two respective pieces of stamped metal sheets and connected together by at least one joining element, such as a rivet or a screw, retaining the axis (5).

12. Device, according to claim 9 or 11, **characterised in that** the axis (5) is fixed to the twin plates (1a,1b) and acts as a joining element between them.

13. Device, according to claim 8, **characterised in that** it comprises an external housing (9) that has two facing grooves (10) parallel to the tension transmission direction, where end portions of the axis (5) are inserted in a sliding manner.

14. Device, according to claim 13, **characterised in that** said end portions of the first and second gripping configuration (2a, 3a) are also inserted in a sliding manner into said two facing grooves (10) of said external housing (9).

15. Device, according to claim 13, **characterised in that** said external housing (9) has another pair of facing grooves (11) substantially parallel to the tension transmission direction, into where the end portions of the pushing element (4a) are inserted in a sliding manner.

16. Device, according to claim 13, **characterised in that** it includes an elastic element placed between the connection element (1) and said external housing (9) for charging itself by accumulating energy when the connection element (1) passes from the deactivated position to the activated position and for activating, by freeing the accumulated energy, a return of the connection element (1) to the deactivated position when said tension between the first and second tensing element (2, 3) stops.

17. Device, according to claim 13, **characterised in that** said external housing (9) is connected to a tension generator (12), said tensing element (2) being a shaft, prolongation of a screw spindle (13) of said tension device (12), and said second tensing element (3) being a flexible cable connected to said auxiliary brake of the vehicle.

18. Device, according to claim 1, **characterised in that** the connection element (1) comprises:
- a first element (20) joined to said first end (2a) of the first tensing element (2);
- a second element connected to said end (3a) of the second end of the second tensing element (3) joined from an end (31) by an articulation (50) to said first element (20) and comprising on its other end, distal, an entering configuration (32);
- a third element (40) joined to an end (21) of the first element (20) by an articulation (51), distal from articulation (50), said third element (40) integrating in one end a configuration (41) susceptible of taking and retaining said entering configuration (32) and comprising a lever arm (42); a free end (42a) of said lever arm (42) being joined to said actuating means (4) by one end of said first element (20), distal from articulation (51), so that when the ends (22) and (42) get near thanks to the activation of said actuating means (4), the hook of configuration (41) is freed from configuration (42).

19. Device, according to claim 18, **characterised in that** said end (2a) of the first tensing element (2) is placed between articulations (50) and (51) and the end (3a) of the second tensing element (3) is joined articulately to the middle portion (33) of the second element (30).

20. Device, according to claim 18, **characterised in that** said first element (20) is formed by facing parallel twin plates (20a, 20b) joined together by said end (22) in the shape of a bridge, separated from articulation (50), and the twin plate (20a, 20b) defining a separation between them, where said second element (30) is placed, arranged in an embracing manner.

21. Device, according to claim 20, **characterised in that** articulation (50) is situated between said union area of end (2a) and said end (22)

22. Device, according to claim 20, **characterised in that** the facing twin plates (20a, 20b) each comprise respective pairs of elongated openings (23) forming a connection with said extreme (3a) that forms in turn a gripping configuration in the shape of a cylindrical body transverse to a tension transmission element, the ends of said cylindrical body penetrating in said elongated openings (23).

23. Device, according to claim 22, **characterised in that** said elongated openings (23) have an arc shaped development.

24. Device, according to any of the claims from 18 to 23, **characterised in that** the actuating means are formed by a Bowel cable (61) whose cover is joined to end (22), and the end (62) of the cable is joined to the end (42a) of the lever (42).

25. Device, according to any of the claims from 18 to 23, **characterised in that** the actuating means are formed by a Bowel cable (61) whose cover is joined to end (22), and the end (62) of the cable (61) is joined to the end (42a) of the lever (42), also comprising a co-axial spring (70) around the stretch of the cable between the two said ends (22, 42) that tends to separate them.

26. Device, according to any of the claims from 18 to 23, **characterised** because it comprises a spring (80) that tends to keep the connection elements (30), (40) in a position that keeps the respective configurations (32) and (41) connected, helping to recuperate said state from the situation of liberation of said configurations (32, 41) when the first tensing element (2) liberates tension by the actuation of said device (12).
